# EUROPÄISCHE PATENTANMELDUNG

(11) **EP 3 808 716 A1**
(43) Veröffentlichungstag der Anmeldung: **21.04.2021**
(21) Anmeldenummer: 20201368.6
(22) Anmeldetag: 12.10.2020
(51) Int. Cl.: C04B 35/626, C04B 35/628, C04B 35/80

(54) **VERFAHREN ZUR HERSTELLUNG MIT BORNITRID BESCHICHTETER VERSTÄRKUNGSFASERN UND/ODER MIT BORNITRID BESCHICHTETER VERSTÄRKUNGSFASERBÜNDEL, MIT DEM VERFAHREN HERSTELLBARE VERSTÄRKUNGSFASERN ODER VERSTÄRKUNGSFASERBÜNDEL SOWIE DEREN VERWENDUNG**

(30) Priorität: 16.10.2019 DE 102019215938
(71) Anmelder: FRAUNHOFER-GESELLSCHAFT zur Förderung der angewandten Forschung e.V., 80686 München (DE)
(72) Erfinder: Nöth, Dr. Andreas, 95448 Bayreuth (DE); Maier, Jonathan, 95448 Bayreuth (DE)
(74) Vertreter: Pfenning, Meinig & Partner mbB

(57) **Zusammenfassung**

Die vorliegende Erfindung betrifft ein Verfahren zur Herstellung mit Bornitrid beschichteter Verstärkungsfasern und/oder mit Bornitrid beschichteter Verstärkungsfaserbündel, bei welchem mindestens eine Verstärkungsfaser und/oder mindestens ein Verstärkungsfaserbündel bereitgestellt wird, die mindestens eine Verstärkungsfaser und/oder das mindestens eine Verstärkungsfaserbündel mit mindestens einer Precursor-Beschichtung versehen wird, die mindestens ein Edukt zur Herstellung von Bornitrid enthält, und die mindestens eine Precursor-Beschichtung in mindestens eine Bornitrid-Beschichtung umgewandelt wird, indem die mit der mindestens einen Precursor-Beschichtung versehene mindestens eine Verstärkungsfaser und/oder das mit der mindestens einen Precursor-Beschichtung versehene mindestens eine Verstärkungsfaserbündel einer Pyrolyse in einer Prozessatmosphäre, die elementaren Wasserstoff enthält, unterzogen wird. Bevorzugt werden Harnstoff und Borsäure benutzt und wird eine hexagonale Bornitridphase erzeugt.

## Beschreibung

Die vorliegende Erfindung betrifft ein Verfahren zur Herstellung mit Bornitrid beschichteter Verstärkungsfasern und/oder mit Bornitrid beschichteter Verstärkungsfaserbündel, bei welchem mindestens eine Verstärkungsfaser und/oder mindestens ein Verstärkungsfaserbündel bereitgestellt wird, die mindestens eine Verstärkungsfaser und/oder das mindestens eine Verstärkungsfaserbündel mit mindestens einer Precursor-Beschichtung versehen wird, die mindestens ein Edukt zur Herstellung von Bornitrid enthält, und die mindestens eine Precursor-Beschichtung in mindestens eine Bornitrid-Beschichtung umgewandelt wird, indem die mit der mindestens einen Precursor-Beschichtung versehene mindestens eine Verstärkungsfaser und/oder das mit der mindestens einen Precursor-Beschichtung versehene mindestens eine Verstärkungsfaserbündel einer Pyrolyse in einer Prozessatmosphäre, die elementaren Wasserstoff enthält, unterzogen wird.

Zudem betrifft die vorliegende Erfindung auch eine Verstärkungsfaser oder ein Verstärkungsfaserbündel sowie deren Verwendung, wobei die Verstärkungsfaser oder das Verstärkungsfaserbündel mindestens eine Bornitridbeschichtung umfasst und diese nach dem erfindungsgemäßen Verfahren zur Herstellung mit Bornitrid beschichteter Verstärkungsfasern und/oder mit Bornitrid beschichteter Verstärkungsfaserbündel herstellbar oder hergestellt ist.

Keramische Faserverbundwerkstoffe (engl. CMC = Ceramic Matrix Composites) benötigen eine geeignete Anbindung (Interface) zwischen der keramischen Verstärkungsfaser und der umgebenden keramischen Matrix, um ein schadenstolerantes Bruchverhalten und/oder hohe Bruchdehnungen des Werkstoffs zu ermöglichen. Die geeignete Anbindung wird in dichten CMCs mit geringem Porenvolumengehalt über eine Beschichtung der Fasern realisiert.

Um die Einzelfilamente eines Faserbündels zu beschichten, werden hauptsächlich zwei Verfahren angewendet: 1. Chemische Gasphasenabscheidung (CVD) und 2. Flüssigphasen-Beschichtung.

Die Flüssigphasen-Beschichtung bietet gegenüber dem CVD-Verfahren folgende, potentielle Vorteile:
- Geringere Investitionskosten
- Einfache Modifikation der Anlage und des Verfahrens
- Hohes Maß an Prozess-Flexibilität
- Einfacheres Hochskalieren des Verfahrens
- Hohe Prozessgeschwindigkeiten
- Geringe Wartungskosten
- Vielzahl von Stoffsystemen applizierbar

Um das schadenstolerante Bruchverhalten und/oder hohe Dehnungen zu erreichen, werden als Materialien für die Faserbeschichtung "pyrolytischer Kohlenstoff" (PyC) oder "Bornitrid" (BN) eingesetzt. BN bietet den Vorteil, dass es gegenüber PyC eine bessere Oxidationsstabilität besitzt (Composites Part A, 1998, 29, 1145-1155).

Das Beschichten von Fasern mit BN über das Verfahren der Flüssigphasen-Beschichtung ist möglich, jedoch bestehen gemäß Stand der Technik zwei gravierende Nachteile:
1. Beim Einsatz von polymeren Precursoren (z.B. auf Basis von Polyborazin, siehe Materials, 2014, 7, 7436-7459) muss das Verfahren unter Sauerstoff-Ausschluss in inerter Atmosphäre durchgeführt werden, da die Beschichtungsprecursoren sehr oxidations- und hydrolyse-empfindlich sind. Im schlimmsten Fall beginnen die Precursoren sich bei Kontakt zu Sauerstoff oder an feuchter Luft zu entzünden. Durch Kontamination mit Sauerstoff wird die Funktionalität der Faserbeschichtung eingeschränkt oder komplett verhindert. Die Anforderung der Inert-Atmosphäre macht das Verfahren aufwändiger und deutlich teurer. Weiterhin sind die Kosten für die Precursoren relativ hoch, da die Rohstoffe teuer sind und die Synthese aufwändig ist.
2. Durch Einsatz von luftstabilen Precursoren (z.B. Borsäure, Borsäure + Harnstoff) können ebenfalls Faserbeschichtungen aus BN hergestellt werden. Die Beschichtungen werden typischerweise in Stickstoff (N₂) oder Ammoniak (NH₃)-Atmosphären pyrolysiert. Nachteile der beschriebenen Verfahren sind aufwändige Pyrolyseprozesse mit langen Haltezeiten bei Maximaltemperatur oder Segmenten bei Unterdruck. Häufig weisen die so hergestellten BN-Faserbeschichtungen Verunreinigungen mit Sauerstoff, Kohlenstoff oder weiteren Fremdatomen auf. Weiterhin weicht das Verhältnis von B/N meist stark von der stöchiometrischen Zusammensetzung (B/N=1) ab.

Gemäß dem Stand der Technik gibt es für die Herstellung von BN-Faserbeschichtungen über luftstabile Precursoren verschiedene Ansatzmöglichkeiten. Dabei werden verschiedene Rohstoffe und Rohstoff-Kombinationen eingesetzt, z.B. Borsäure, Borsäure + Harnstoff. Auch bei der Thermoprozessierung (Pyrolyse) werden unterschiedliche Parameter für das Brennprogramm und die Zusammensetzung der Ofenatmosphären genannt. Der Einsatz von H₂ oder H₂-haltigen Atmosphären wurde nach unserem Kenntnisstand bisher nicht beschrieben und stellt somit technisches Neuland dar. Im Folgenden werden die wichtigsten Arbeiten zum Stand der Technik beschrieben.

Das et al. beschichteten Carbonfasern mit einer gesättigten Lösung aus Borsäure und pyrolysierten die Schichten anschließend bei 1200 °C in Stickstoff (J. Eur. Ceram. Soc., 2009, 29, 2129-2134). Die Beschichtungen wiesen sehr hohe Kohlenstoffgehalte und Verunreinigungen mit Sauerstoff auf. Weiterhin haben die Schichten ein N/B-Verhältnis < 1 und sind somit nicht stöchiometrisch. Als Elementverhältnisse wurden folgende Werte bestimmt: N/B = 0,71 bis 0,52; B/C= 0,91 bis 0,37 und O/B = 0,15 bis 0,19.

Shen et al. haben BN-Beschichtungen auf SiC-Fasern durch Beschichtung mit 0,6-molarer Borsäure hergestellt (J. Am. Ceram. Soc., 1994, 77, 1011-1016). Nach einer ersten Pyrolyse in Stickstoff bis 1000 °C und einer zweiten in Ammoniak bis 1000 °C und einer Haltezeit von 1,5 Stunden wurde amorphes BN erzielt. Die Zusammensetzung des BN liegt dabei je nach Haltezeit bei der Maximaltemperatur zwischen 0,6 N/B und 0,8 N/B und einem Sauerstoffgehalt von 0,1 O/B (Sauerstoff/Bor) bis 0,25 O/B. Bei Pyrolyse in Ammoniak wurde eine Korrosion der SiC-Fasern mit starkem Abfall der mechanischen Festigkeiten beobachtet. Somit konnte über diese Route keine Faserbeschichtung mit stöchiometrischem und hexagonalem BN erreicht werden. Die Beschichtungen sind amorph.

Ding et al. stellten BN-Beschichtungen auf SiC-Fasergewebe aus einem Gemisch aus Borsäure und Harnstoff her (Mater. Sci. Eng., A, 2012, 543, 1-5). Die Rohstoffe wurden in einem Masseverhältnis von 2:18 gemischt. Die Beschichtungen wurden in Stickstoff bei 1000 °C für 2 Stunden eingebrannt. Anhand von Röntgenbeugungsmessungen wird gezeigt, dass hexagonales BN auf dem Fasergewebe abgeschieden wurde. Allerdings werden von den Autoren keine Angaben zu der Zusammensetzung der BN-Beschichtung und möglicher Verunreinigungen aufgeführt.

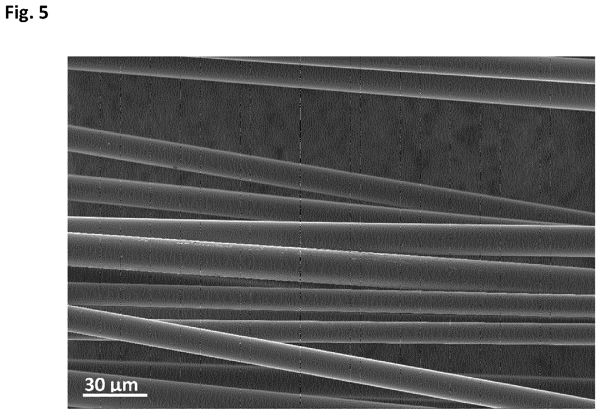

Ghanbarian et al. beschichteten C-Fasergewebe mit einer Mischung aus Borsäure und Harnstoff mit einem Molverhältnis von 4:1 (Surf. Coat. Technol., 2016, 288, 185-195). Die Beschichtungen wurden für 10 Stunden an Luft getrocknet und anschließend bei 120 °C für eine Stunde getempert, um überschüssiges Lösemittel zu entfernen. Anschließend wurden die Proben im Unterdruck bei 400 mTorr und einer Temperatur von 150 °C getempert. Im nächsten Prozess-Schritt wurden die Proben bei 650 °C bzw. 1000 °C in Stickstoff für 2 Stunden getempert. Die Autoren behaupten, bei einer Pyrolysetemperatur von 1000 °C hexagonales BN zu erhalten. Allerdings zeigt sich in Fig. 5 der Veröffentlichung, dass die BN-Beschichtungen auch große Mengen an Verunreinigungen mit Sauerstoff aufweisen.

Lii et al. applizierten BN-Beschichtungen auf C-Fasern. Es wurden Borsäure und Harnstoff in einem molaren Mischungsverhältnis von 1:1 eingesetzt (Surf. Coat. Technol., 2002, 150, 269-276). Die applizierte Beschichtungslösung wurde für 10 Stunden an Luft getrocknet. Anschließend wurde überschüssiges Lösemittel bei 100 °C für eine Stunde entfernt. Für die Pyrolyse wurden die Beschichtungen auf 400 °C im Unterdruck bei 50 mTorr aufgeheizt, anschließend NH₃ in den Ofen eingeströmt und die Proben bei bis zu 1000 °C für eine Stunde getempert. Auf diese Weise wurden amorphe BN-Beschichtungen mit Verunreinigungen von Sauerstoff erhalten. Die Autoren vermuteten, dass B₂O₃ neben BN in den Beschichtungen vorliegt.

Der Erfindung liegt somit die Aufgabe zugrunde, ein Verfahren zur Herstellung einer Faserbeschichtung aus zumindest nahezu stöchiometrischem Bornitrid mit einem möglichst sehr geringen Anteil an Verunreinigungen wie Sauerstoff oder Kohlenstoff bereitzustellen.

Diese Aufgabe wird bezüglich eines Verfahrens zur Herstellung mit Bornitrid beschichteter Verstärkungsfasern und/oder mit Bornitrid beschichteter Verstärkungsfaserbündel mit den Merkmalen des Patentanspruchs 1 und bezüglich einer mit Bornitrid beschichteten Verstärkungsfaser oder einem mit Bornitrid beschichteten Verstärkungsfaserbündel mit den Merkmalen des Patentanspruchs 12 gelöst. In Patentanspruch 15 werden Verwendungsmöglichkeiten der Verstärkungsfaser oder des Verstärkungsfaserbündels angegeben. Die jeweiligen abhängigen Patentansprüche stellen dabei vorteilhafte Weiterbildungen dar.

Erfindungsgemäß wird somit ein Verfahren zur Herstellung mit Bornitrid beschichteter Verstärkungsfasern und/oder mit Bornitrid beschichteter Verstärkungsfaserbündel angegeben, bei welchem
a) mindestens eine Verstärkungsfaser und/oder mindestens ein Verstärkungsfaserbündel bereitgestellt wird,
b) die mindestens eine Verstärkungsfaser und/oder das mindestens eine Verstärkungsfaserbündel mit mindestens einer Precursor-Beschichtung versehen wird, die mindestens ein Edukt zur Herstellung von Bornitrid enthält, und
c) die mindestens eine Precursor-Beschichtung in mindestens eine Bornitrid-Beschichtung umgewandelt wird, indem die mit der mindestens einen Precursor-Beschichtung versehene mindestens eine Verstärkungsfaser und/oder das mit der mindestens einen Precursor-Beschichtung versehene mindestens eine Verstärkungsfaserbündel einer Pyrolyse in einer Prozessatmosphäre, die elementaren Wasserstoff (H₂) enthält, unterzogen wird.

In Schritt b) wird die in Schritt a) bereitgestellte mindestens eine Verstärkungsfaser und/oder das in Schritt a) bereitgestellte mindestens eine Verstärkungsfaserbündel mit mindestens einer Precursor-Beschichtung versehen. Dies gelingt beispielsweise durch die Verwendung einer entsprechenden Beschichtungslösung. Die mindestens eine Precursor-Beschichtung kann somit vorzugsweise mittels eines Flüssigphasenbeschichtungsprozesses hergestellt werden. Außerdem kann der Schichtauftrag an Luft erfolgen. Der Aufwand einer Beschichtung unter Inertatmosphäre entfällt somit, was eine deutliche Kostenreduktion zur Folge hat.

In Schritt c) kommt es durch einen Pyrolyseprozess zur Umwandlung der mindestens einen Precursor-Beschichtung in die gewünschte mindestens eine Bornitrid-Beschichtung.

Bei der mindestens einen Precursor-Beschichtung handelt es sich um eine Beschichtung, die mindestens ein Edukt zur Herstellung von Bornitrid, d.h. mindestens einen Bornitrid-Precursor, enthält oder aus diesem besteht. Beispielsweise kann die mindestens eine Precursor-Beschichtung Borsäure und Harnstoff als Bornitrid-Precursor bzw. Edukte enthalten. In diesem Beispiel würde dann durch die Pyrolyse in Schritt c) Bornitrid aus Borsäure und Harnstoff entstehen. Auf diese Weise würde dann die mindestens eine Precursor-Beschichtung in mindestens eine Bornitrid-Beschichtung umgewandelt werden.

Kern der Erfindung ist die Verwendung einer Wasserstoff-Atmosphäre (d.h. H₂-Atmospähre) oder einer Wasserstoff-haltigen (d.h. H₂-haltigen) Atmosphäre als Prozessatmosphäre bei der Pyrolyse in Schritt c), wodurch eine stöchiometrische oder nahezu stöchiometrische Zusammensetzung sowie eine sehr hohe Reinheit der mindestens einen Bornitrid-Beschichtung erreicht wird. So weist die erhaltene mindestens eine Bornitrid-Beschichtung aufgrund der Verwendung von elementarem Wasserstoff in der Prozessatmospähre nur sehr geringe Anteile an Verunreinigungen mit Sauerstoff und sogar nicht mehr nachweisbare Verunreinigungen mit Kohlenstoff auf. Durch diese hohe Reinheit und die zumindest nahezu stöchiometrische Zusammensetzung der mindestens einen Bornitrid-Beschichtung werden die Funktionalität und die Korrosions- und Hochtemperaturstabilität der Faserbeschichtung verbessert.

Unter stöchiometrischem Bornitrid bzw. Bornitrid mit einer stöchiometrischen Zusammensetzung wird erfindungsgemäß Bornitrid in einer Zusammensetzung mit einem molaren Verhältnis von Bor zu Stickstoff (B/N) von 1 verstanden. Unter nahezu stöchiometrischem Bornitrid bzw. Bornitrid mit einer nahezu stöchiometrischen Zusammensetzung wird erfindungsgemäß beispielsweise Bornitrid in einer Zusammensetzung mit einem molaren Verhältnis (B/N) im Bereich von 0,95 bis 1,05 verstanden.

Eine bevorzugte Variante des erfindungsgemäßen Verfahrens zeichnet sich dadurch aus, dass die Prozessatmosphäre einen Wasserstoffgehalt von mehr als 5 %, bevorzugt einen Wasserstoffgehalt von mehr als 20 %, besonders bevorzugt einen Wasserstoffgehalt von mehr als 50 %, ganz besonders bevorzugt einen Wasserstoffgehalt von mehr als 70 %, aufweist. Unter Wasserstoffgehalt wird hierbei der Gehalt an elementarem Wasserstoff (H₂) verstanden.

Die Anwendung einer Wasserstoff-haltigen Prozessatmosphäre ist, wie bereits erwähnt, elementar für die Erfindung, da die Anwesenheit von elementarem Wasserstoff die Bildung von zumindest nahezu stöchiometrischem Bornitrid ermöglicht. Höhere Gehalte von mehr 5 % elementarem Wasserstoff, bevorzugt von mehr als 20 %, besonders bevorzugt von mehr als 50 %, ganz besonders bevorzugt von mehr als 70 %, in der Prozessatmosphäre beschleunigen einerseits den Pyrolyseprozess, vor allem aber gewährleisten diese eine nahezu quantitative Umsetzung des mindestens einen in der Precursor-Beschichtung enthaltenen Edukts zur Herstellung von Bornitrid. Dadurch wird schließlich die Bildung von zumindest nahezu stöchiometrischem Bornitrid weiter begünstigt.

Eine weitere bevorzugte Variante des erfindungsgemäßen Verfahrens ist dadurch gekennzeichnet, dass die Prozessatmosphäre aus elementarem Wasserstoff besteht oder aus einem Gemisch aus elementarem Wasserstoff und elementarem Stickstoff und/oder (elementarem) Argon besteht.

Durch eine entsprechende Einstellung des Wasserstoff-Gehaltes in der Prozessatmosphäre ist, wie zuvor erwähnt, der Pyrolyseprozess hinsichtlich seiner Dauer und seines Reaktionsumsatzes steuerbar. Der Zusatz etwaiger Inertgase, wie Stickstoff und/oder Argon, stellen dabei im Falle niedriger gewünschter Wasserstoff-Gehalte die Abwesenheit von Sauerstoff sicher. Dadurch werden Verunreinigungen der Bornitridbeschichtung durch Sauerstoff signifikant gegenüber Verfahren, wie sie aus dem Stand der Technik bekannt sind, verringert.

Eine weitere bevorzugte Variante des erfindungsgemäßen Verfahrens ist dadurch gekennzeichnet, dass die mindestens eine Verstärkungsfaser und/oder das mindestens eine Verstärkungsfaserbündel während der Pyrolyse in Schritt c) mit einer Heizrate von weniger als 20 K/min, bevorzugt mit einer Heizrate von 15 K/min bis 5 K/min, aufgeheizt wird, wobei vorzugsweise die Pyrolyse kontinuierlich oder in einem Batchprozess durchgeführt wird.

Vorzugsweise werden bei der Batchpyrolyse die mindestens eine beschichtete Verstärkungsfaser und/oder das mindestens eine Verstärkungsfaserbündel bei einer der besagten Heizraten bis 1.600 °C aufgeheizt und anschließend wieder auf Raumtemperatur gekühlt. Die beschichteten Verstärkungsfasern und/oder Verstärkungsfaserbündel können dabei in einem Rohrofen kontinuierlich oder in einem Kammerofen im Batchprozess pyrolysiert werden. Bei der Pyrolyse im Batchprozess können die Verstärkungsfasern und/oder Verstärkungsfaserbündel auf eine hochtemperaturstabile Spule gewickelt werden. Die Spule muss gegenüber hohen Temperaturen und der Pyrolyseatmosphäre stabil sein. Hierfür eignet sich z.B. eine Spule aus SiCfaserverstärktem SiC.

Eine weitere bevorzugte Variante des erfindungsgemäßen Verfahrens ist dadurch gekennzeichnet, dass die Pyrolyse in Schritt c) ohne Haltezeiten durchgeführt wird.

Beim erfindungsgemäßen Pyrolyseprozess ist keine Haltezeit bei hohen Temperaturen bzw. Maximaltemperaturen notwendig. Durch den Verzicht auf Haltezeiten ist ein kontinuierlicher Pyrolyseprozess möglich. Der erfindungsgemäße Pyrolyseprozess ist somit im Vergleich zum Stand der Technik einfacher durchzuführen; die Bornitrid-Beschichtungen auf den Verstärkungsfasern und/oder Verstärkungsfaserbündeln können in einem kontinuierlichen Prozess eingebrannt werden

Eine weitere bevorzugte Variante des erfindungsgemäßen Verfahrens ist dadurch gekennzeichnet, dass das mindestens eine Edukt zur Herstellung von Bornitrid mindestens ein Bor-haltiges Edukt, vorzugsweise Borsäure, und mindestens ein Stickstoff-haltiges Edukt, vorzugsweise Harnstoff, enthält.

Beim Pyrolyseprozess kann, wie zuvor erwähnt, eine Prozessatmosphäre aus Wasserstoff oder einem Gemisch aus Stickstoff und Wasserstoff verwendet werden. Während der Pyrolyse reagieren Borsäure und Harnstoff unter Abspaltung gasförmiger Produkte. Durch die Anwesenheit von Wasserstoff in der Pyrolyseatmosphäre bildet sich bis 1600 °C ein zumindest nahezu stöchiometrisches Bornitrid, vorzugsweise mit einer hexagonalen Struktur, und ohne oder zumindest sehr geringer Verunreinigung an Sauerstoff und Kohlenstoff aus. Anschließend können die beschichteten Fasern wieder bis Raumtemperatur abgekühlt werden.

Eine weitere bevorzugte Variante des erfindungsgemäßen Verfahrens ist dadurch gekennzeichnet, dass das Versehen der mindestens einen Verstärkungsfaser und/oder des mindestens einen Verstärkungsfaserbündels mit der mindestens einen Precursor-Beschichtung in Schritt b) dadurch realisiert wird, dass die mindestens eine Verstärkungsfaser und/oder das mindestens eine Verstärkungsfaserbündel mit einer Beschichtungslösung, die das mindestens ein Edukt zur Herstellung von Bornitrid enthält, beschichtet wird. Durch die Verwendung einer Beschichtungslösung wird ein homogener Auftrag der Precursor-Beschichtung gewährleistet.

Die Verstärkungsfasern und/oder die Verstärkungsfaserbündel werden dazu vorzugsweise mit einer definierten Geschwindigkeit durch die Beschichtungslösung gezogen. Dadurch kann gewährleisten werden, dass die Precursor-Beschichtung noch homogener auf die Verstärkungsfasern und/oder die Verstärkungsfaserbündel aufgetragen wird, was wiederum vorteilhaft für einen reproduzierbaren Pyrolyseprozess ist.

Eine weitere bevorzugte Variante des erfindungsgemäßen Verfahrens ist dadurch gekennzeichnet, dass die Beschichtungslösung mindestens ein Bor-haltiges Edukt, vorzugsweise Borsäure, mindestens ein Stickstoff-haltiges Edukt, vorzugsweise Harnstoff, und ein Lösungsmittel, welches vorzugsweise ausgewählt ist aus der Gruppe bestehend aus Wasser, Alkoholen, z.B. Ethanol, Methanol, und Mischungen hiervon, umfasst.

Durch Verwendung einer solchen Beschichtungslösung wird ein noch homogenerer Auftrag der Precusor-Beschichtung erreicht. Die hierbei vorgeschlagenen Lösungsmittel eignen sich durch ihre niedrigen Siedepunkte und/oder hohen Dampfdrücke besonders damit die besagten Lösungsmittel ihrerseits quantitativ vor oder während des Pyrolyseprozesses entfernt werden können und dadurch nicht zu potentiellen Verunreinigungen führen.

Eine weitere bevorzugte Variante des erfindungsgemäßen Verfahrens ist dadurch gekennzeichnet, dass die Beschichtungslösung Borsäure, Harnstoff und ein Lösungsmittel, welches vorzugsweise ausgewählt ist aus der Gruppe bestehend aus Wasser, Alkoholen, z.B. Ethanol, Methanol, und Mischungen hiervon, umfasst, wobei Borsäure und Harnstoff bevorzugt in einem Molmengenverhältnis von Borsäure zu Harnstoff im Bereich von 1:2 bis 1:2,5 vorliegen.

Durch die vorgeschlagenen Mischungsbereiche kann Bornitrid mit einer hexagonalen Kristallstruktur hergestellt werden.

Eine weitere bevorzugte Variante des erfindungsgemäßen Verfahrens ist dadurch gekennzeichnet, dass die mindestens eine Verstärkungsfaser und/oder das mindestens eine Verstärkungsfaserbündel nach dem Beschichten mit der Beschichtungslösung getrocknet und stabilisiert wird/werden, wobei das Trocknen und Stabilisieren vorzugsweise bei Temperaturen von weniger als 400 °C, besonders bevorzugt bei Temperaturen von 100 °C bis 350°C, ganz besonders bevorzugt bei Temperaturen von 200 °C bis 300 °C, durchgeführt wird.

Die Trocknung erfolgt bevorzugt durch ein bestimmtes Ofenprogramm, bei welchem die Verstärkungsfasern und/oder die Verstärkungsfaserbündel stufenweise aufgeheizt werden. Im Gegensatz zum Pyrolyseprozess gibt es innerhalb dieser Stufen bestimmte Haltezeiten bei entsprechenden Temperaturen. Dieses Ofenprogram gewährleistet, dass die Verstärkungsfasern und/oder die Verstärkungsfaserbündel von dem Lösungsmittel oder den Lösungsmitteln der Beschichtungslösung in einer kontrollierten Art und Weise separiert werden können. Dadurch kann etwaiges schlagartiges Übersieden des Lösungsmittels oder der Lösungsmittel auf den Faseroberflächen verhindert oder zumindest verringert werden, wodurch letztlich die gewünschte Homogenität der Bornitridbeschichtung ermöglicht werden kann. Die beschichteten Verstärkungsfasern und/oder Verstärkungsfaserbündel können nach der Trocknung auf einer Spule aufgewickelt werden.

Eine weitere bevorzugte Variante des erfindungsgemäßen Verfahrens ist dadurch gekennzeichnet, dass die in Schritt a) bereitgestellte mindestens eine Verstärkungsfaser und/oder das in Schritt a) bereitgestellte mindestens eine Verstärkungsfaserbündel ein Material enthält oder aus diesem besteht, welches ausgewählt ist aus der Gruppe bestehend aus Kohlenstoff, Siliciumcarbid, Oxidkeramiken und Mischungen hiervon.

Die vorliegende Erfindung betrifft auch eine Verstärkungsfaser oder ein Verstärkungsfaserbündel, welches nach dem erfindungsgemäßen Verfahren zur Herstellung mit Bornitrid beschichteter Verstärkungsfasern und/oder mit Bornitrid beschichteter Verstärkungsfaserbündel herstellbar ist oder mit diesem Verfahren hergestellt wurde.

Die Bornitridbeschichtung(en) der erfindungsgemäßen Verstärkungsfaser bzw. des erfindungsgemäßen Verstärkungsfaserbündels zeichnet/zeichnen sich gegenüber aus dem Stand der Technik bekannten Bornitridfaserbeschichtungen dabei durch eine verbesserte chemische Zusammensetzung (d.h. ein Vorliegen von Bornitrid in zumindest nahezu stöchiometrischer Zusammensetzung) sowie eine sehr geringe oder gar nicht vorhandene Verunreinigung durch Sauerstoff und Kohlenstoff aus. Diese Unterschiede zum Stand der Technik sind auf die Herstellung mit dem erfindungsgemäßen Verfahren zurückzuführen.

Eine bevorzugte Variante der erfindungsgemäßen Verstärkungsfaser oder des Verstärkungsfaserbündels ist dadurch gekennzeichnet, dass die mindestens eine Bornitrid-Beschichtung hexagonales Bornitrid enthält oder daraus besteht. Das Vorliegen von hexagonalem Bornitrid kann beispielsweise mittels Röntgenbeugungs-Methoden nachgewiesen werden.

Hexagonales Bornitrid zeichnet sich durch eine verbesserte Korrosions- und Hochtemperaturstabilität und -funktionalität im Einsatz als Faserbeschichtung für CMC aus.

Eine weitere bevorzugte Variante der erfindungsgemäßen Verstärkungsfaser oder des Verstärkungsfaserbündels ist dadurch gekennzeichnet, dass die mindestens eine Bornitrid-Beschichtung
- eine Zusammensetzung mit einem molaren Verhältnis von Bor zu Stickstoff (B/N) im Bereich von 0,95 bis 1,05, bevorzugt im Bereich von 0,98 bis 1,02, besonders bevorzugt im Bereich von 0,99 bis 1,01, und/oder
- einen Sauerstoffgehalt von weniger als 1 Gew.-%, bevorzugt von weniger als 0,2 Gew.-%, besonders bevorzugt von 0,01 Gew.-% bis 0,1 Gew.-%, und/oder
- einen Kohlenstoffgehalt von weniger als 1 Gew.-%, bevorzugt von weniger als 0,2 Gew.-%, besonders bevorzugt von 0,01 Gew.-% bis 0,1 Gew.-%,
aufweist.

Der Sauerstoffgehalt und/oder der Kohlenstoffgehalt können beispielsweise über ein Heißgasextraktionsverfahren (LECO® ONH836, LECO Corporation, St. Joseph, Michigan, USA) bestimmt werden.

Auch das molare Verhältnis von Bor zu Stickstoff kann beispielsweise (indirekt) über ein Heißgasextraktionsverfahren (LECO® ONH836, LECO Corporation, St. Joseph, Michigan, USA) bestimmt werden. Hierfür können der Stickstoffgehalt und der Borgehalt in der Beschichtung bestimmt und anschließend in ein entsprechendes Verhältnis zueinander gestellt werden. Der Stickstoffgehalt kann direkt über das genannte Heißgasextraktionsverfahren bestimmt werden. Der Borgehalt kann dadurch bestimmt werden, dass der Stickstoffgehalt, der Sauerstoffgehalt und der Kohlenstoffgehalt von 100 % abgezogen werden.

Die Zusammensetzung der Bornitridbeschichtung ist somit vorzugsweise nahezu stöchiometrisch (B/N ≈ 1).

Weiterhin betrifft die vorliegende Erfindung die Verwendung der erfindungsgemäßen Verstärkungsfaser oder des erfindungsgemäßen Verstärkungsfaserbündels in Kompositen, bevorzugt keramischen Faserverbundwerkstoffen (CMC), in Isolationsanwendungen, in katalytischen Anwendungen, in elektrischen und dielektrischen Anwendungen, in Sensoranwendungen und/oder zur Energiespeicherung und -wandlung. Anhand des nachfolgenden Beispiels und der Figuren soll die vorliegende Erfindung näher erläutert werden, ohne diese auf die hier gezeigten spezifischen Ausführungsformen und Parameter zu beschränken.
Fig. 1 zeigt die Stickstoff/Bor-Verhältnisse von BN unter Variation des Mischungsverhältnisses von Borsäure und Harnstoff. Hexagonales BN, welches mittels Röntgenbeugung nachgewiesen wurde, wurde dabei innerhalb der Figur markiert.
Fig. 2 zeigt den Sauerstoffgehalt in Abhängigkeit vom Mischungsverhältnis von Borsäure und Harnstoff (1 Mol Borsäure zu n Mol Harnstoff), gemessen mittels Heißgasextraktion (LECO® ONH836) an Pulverproben.
Fig. 3 zeigt das Röntgendiffraktogramm von einer hexagonalen BN-Pulverprobe, wobei das Molmengenverhältnis von Borsäure zu Harnstoff 1:2 ist.
Fig. 4 zeigt eine Rasterelektronenmikroskop-Aufnahme (InLens-Detektor, Beschleunigungsspannung 3 kV, Arbeitsabstand 5 mm) einer BN-Schicht auf einer Hi-Nicalon S Faser.
Fig. 5 zeigt eine Rasterelektronenmikroskop-Aufnahme (InLens-Detektor, Beschleunigungsspannung 3 kV, Arbeitsabstand 5 mm) von mehreren Hi-Nicalon S Fasern mit BN-Beschichtung.

### Ausführungsbeispiel:

Um die korrekte Rohstoffzusammensetzung zu bestimmen, wurden zunächst Borsäure (Carl Roth GmbH + Co KG, Karlsruhe) und Harnstoff (Carl Roth GmbH + Co KG, Karlsruhe) mit verschiedenen Mischungsverhältnissen gemischt und für 10 min gemörsert und homogenisiert. Die Mischungsverhältnisse sind in Tabelle 1 mit den jeweiligen Einwaagen aufgetragen.

**Tabelle 1: Mischungsverhältnisse von Borsäure und Harnstoff mit den jeweiligen Einwaagen für die Pyrolyse zu Bornitrid.**

| **Mischungsverhältnisse [Mol(Borsäure)/Mol(Harnstoff)]** | **Einwaage Borsäure [g]** | **Einwaage Harnstoff [g]** |
|---|---|---|
| 1:1 | 18,5 | 18 |
| 1:1,5 | 11 | 16 |
| 1:2 | 8,3 | 16 |
| 1:2,25 | 7,3 | 16 |
| 1:2,5 | 6,6 | 16 |
| 1:3 | 11 | 32 |
| 1:4 | 8,2 | 32 |
| 1:5 | 6,6 | 32 |
| 1:6 | 4,8 | 28 |

In einem Kohlenstofftiegel wurden die Mischungen zur Pyrolyse gegeben. Die Pyrolyse fand in einen Batchofen (CAF 200/200_2200G, MUT ADAVANCED HEATING GmbH, Jena) mit einem bestimmten Ofenprogramm in einer Atmosphäre mit 80 % H₂ und 20 % N₂ statt. Das besagte Ofenprogramm ist in Tabelle 2 zusammengefasst.

**Tabelle 2: Ofenprogramm für die Pyrolyse von Borsäure und Harnstoff zu Bornitrid im Batchofen. Als Atmosphäre bei der Pyrolyse wurde eine Zusammensetzung von 80 % H₂ und 20 % N₂ gewählt.**

| **Starttemperatur** | **Heizrate** | **Endtemperatur** | **Haltezeit** |
|---|---|---|---|
| 25 °C | 25 K/min. | 275 °C | 30 min |
| 275 °C | 10 K/min. | 1600 °C | 1 min |

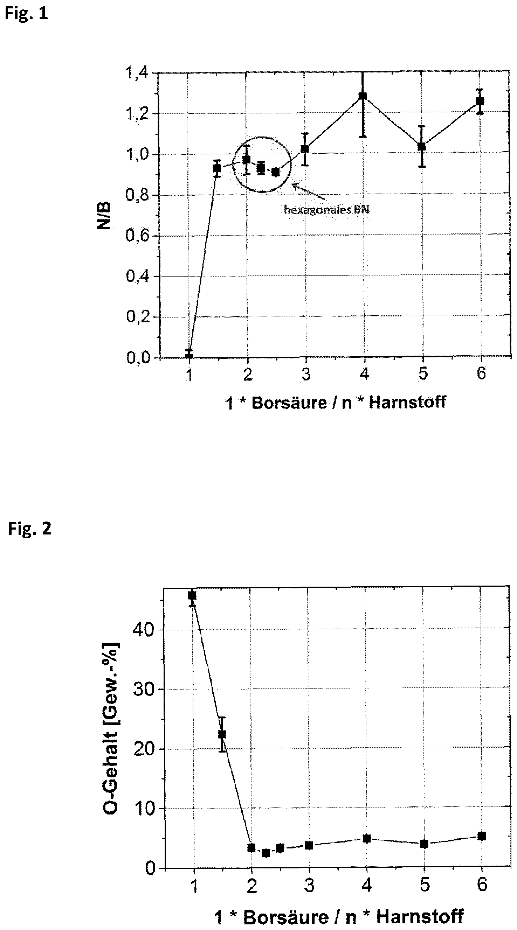

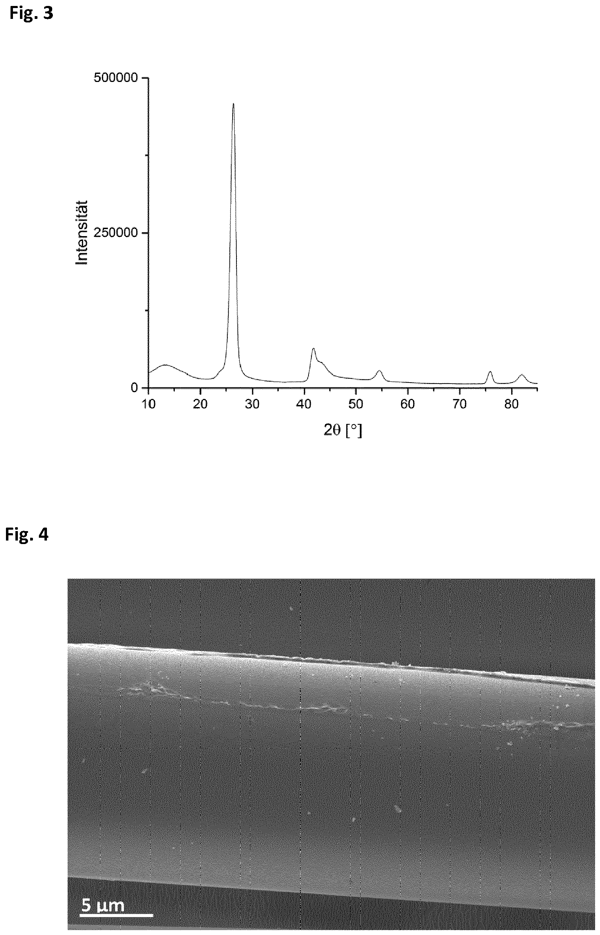

Die Sauerstoff- und Stickstoffgehalte wurden über ein Heißgasextraktionsverfahren (LECO® ONH836, LECO Corporation, St. Joseph, Michigan, USA) bestimmt. Der Restwert zu 100 Gew.-% wurde als Borgehalt angenommen. Es wurde festgestellt, dass mit einem Molmengenverhältnis von Borsäure zu Harnstoff im Bereich 1:2 bis 1:2,5 stöchiometrisches BN mit einer hexagonalen Kristallstruktur hergestellt werden kann (siehe Markierung in Fig. 1 sowie Fig. 3). Der Sauerstoffgehalt des Bornitrids als Pulverprobe bei einem Molmengenverhältnis von 1:2 war mit 2,2 Gew-% gering (Fig. 2). Der Gehalt an Verunreinigungen mit Kohlenstoff lag unter der Nachweisgrenze von 0,135 Gew.-%.

Nach der oben beschriebenen Bestimmung der korrekten Mischungsverhältnisse, wurden SiC-Fasern mit einer flüssigen Beschichtungslösung kontinuierlich beschichtet. Für die Beschichtungslösung wurden die Rohstoffe Borsäure und Harnstoff mit einem Molmengenverhältnis 1:2 eingesetzt. Für die Herstellung der Beschichtungslösung werden 39,80 g Harnstoff (Carl Roth GmbH + Co KG, Karlsruhe) und 20,58 g Borsäure (Carl Roth GmbH + Co KG, Karlsruhe) in einer Lösung bestehend aus 255 g Ethanol und 250 g deionisiertem Wasser gelöst. Beschichtet wurden SiC-Fasern vom Typ Hi-Nicalon S (NGS Advanced Fibers Co., Ltd., Toyama, Japan). Vor dem Beschichtungsvorgang wurden die Faserbündel entschlichtet. Bei der Entschlichtung wurde das Faserbündel durch einen 2 m langen Rohrofen mit 750 °C und einer Ziehgeschwindigkeit von 200 m/h geführt. Die Beschichtung wurde mit einer speziellen Faserbeschichtungsanlage nasschemisch im Tauchverfahren aufgebracht. Zuerst wurde das Faserbündel durch die Beschichtungslösung gezogen und anschließend in einem Schlitzofen (HTM Reetz GmbH, Berlin) bei 275 °C und einer Ofenlänge von 0,5 m getrocknet. Die Ziehgeschwindigkeit durch das Beschichtungsbad und den Trocknungsofen war 750 m/h. Im Anschluss an die Trocknung wurde die Schicht in einem Batchofen (CAF 200/200_2200G, MUT ADAVANCED HEATING GmbH, Jena) zu Bornitrid pyrolysiert. Die Proben wurden in einer Atmosphäre mit 80 % H₂ und 20 % N₂ ohne Haltezeiten mit einer Heizrate von 10 K/min auf 1600 °C aufgeheizt. Fig. 4 und Fig. 5 zeigen Hi-Nicalon S Fasern, die über die beschriebene Route mit BN beschichtet wurden.

Zum Vergleich der Sauerstoff- und Stickstoffgehalte von unbeschichteten und mit Bornitrid beschichteten Hi-Nicalon S Fasern wurden Faserproben gemörsert und mittels Heißgasextraktionsverfahren (LECO® ONH836, LECO Corporation, St. Joseph, Michigan, USA) analysiert. In Tabelle 3 sind die Sauerstoff- und Stickstoffgehalte der Proben aufgetragen.

**Tabelle 3: Sauerstoff- und Stickstoffgehalte einer Hi-Nicalon S Faser mit und ohne Bornitrid-Beschichtung, gemessen an gemörserten Faserproben mittels Heißgasextraktion (LECO® ONH836).**

| | **Sauerstoffgehalt [Gew.-%]** | **Stickstoffgehalt [Gew.-%]** |
|---|---|---|
| Hi-Nicalon S | 0,693 | 0,0386 |
| BN-Schicht auf Hi-Nicalon S | 0,680 | 0,482 |

Der Stickstoffgehalt der Proben wurde durch den Auftrag einer BN-Beschichtung von 0,0386 Gew.-% auf 0,482 Gew.-% erhöht. Dahingegen war bei den Sauerstoffgehalten keine Veränderung nach der Beschichtung mit BN festzustellen. Dies zeigt, dass die BN-Beschichtungen frei von Sauerstoff sind.

## Patentansprüche

1. Verfahren zur Herstellung mit Bornitrid beschichteter Verstärkungsfasern und/oder mit Bornitrid beschichteter Verstärkungsfaserbündel, bei welchem
a) mindestens eine Verstärkungsfaser und/oder mindestens ein Verstärkungsfaserbündel bereitgestellt wird,
b) die mindestens eine Verstärkungsfaser und/oder das mindestens eine Verstärkungsfaserbündel mit mindestens einer Precursor-Beschichtung versehen wird, die mindestens ein Edukt zur Herstellung von Bornitrid enthält, und
c) die mindestens eine Precursor-Beschichtung in mindestens eine Bornitrid-Beschichtung umgewandelt wird, indem die mit der mindestens einen Precursor-Beschichtung versehene mindestens eine Verstärkungsfaser und/oder das mit der mindestens einen Precursor-Beschichtung versehene mindestens eine Verstärkungsfaserbündel einer Pyrolyse in einer Prozessatmosphäre, die elementaren Wasserstoff enthält, unterzogen wird.

2. Verfahren gemäß dem vorhergehenden Anspruch, **dadurch gekennzeichnet, dass** die Prozessatmosphäre einen Wasserstoffgehalt von mehr als 5 %, bevorzugt einen Wasserstoffgehalt von mehr als 20 %, besonders bevorzugt einen Wasserstoffgehalt von mehr als 50 %, ganz besonders bevorzugt einen Wasserstoffgehalt von mehr als 70 % aufweist.

3. Verfahren gemäß einem der vorhergehenden Ansprüche, **dadurch gekennzeichnet, dass** die Prozessatmosphäre aus elementarem Wasserstoff besteht oder aus einem Gemisch aus elementarem Wasserstoff und elementarem Stickstoff und/oder Argon besteht.

4. Verfahren gemäß einem der vorhergehenden Ansprüche, **dadurch gekennzeichnet, dass** die mindestens eine Verstärkungsfaser und/oder das mindestens eine Verstärkungsfaserbündel während der Pyrolyse in Schritt c) mit einer Heizrate von weniger als 20 K/min, bevorzugt mit einer Heizrate von 15 K/min bis 5 K/min, aufgeheizt wird, wobei vorzugsweise die Pyrolyse kontinuierlich oder in einem Batchprozess durchgeführt wird.

5. Verfahren gemäß einem der vorhergehenden Ansprüche, **dadurch gekennzeichnet, dass** die Pyrolyse in Schritt c) ohne Haltezeiten durchgeführt wird.

6. Verfahren gemäß einem der vorhergehenden Ansprüche, **dadurch gekennzeichnet, dass** das mindestens eine Edukt zur Herstellung von Bornitrid mindestens ein Bor-haltiges Edukt, vorzugsweise Borsäure, und mindestens ein Stickstoff-haltiges Edukt, vorzugsweise Harnstoff, enthält.

7. Verfahren gemäß einem der vorhergehenden Ansprüche, **dadurch gekennzeichnet, dass** das Versehen der mindestens einen Verstärkungsfaser und/oder des mindestens einen Verstärkungsfaserbündels mit der mindestens einen Precursor-Beschichtung in Schritt b) dadurch realisiert wird, dass die mindestens eine Verstärkungsfaser und/oder das mindestens eine Verstärkungsfaserbündel mit einer Beschichtungslösung, die das mindestens eine Edukt zur Herstellung von Bornitrid enthält, beschichtet wird.

8. Verfahren gemäß Anspruch 7, **dadurch gekennzeichnet, dass** die Beschichtungslösung mindestens ein Bor-haltiges Edukt, vorzugsweise Borsäure, mindestens ein Stickstoff-haltiges Edukt, vorzugsweise Harnstoff, und ein Lösungsmittel, welches vorzugsweise ausgewählt ist aus der Gruppe bestehend aus Wasser, Alkoholen, z.B. Ethanol, Methanol, und Mischungen hiervon, umfasst.

9. Verfahren gemäß Anspruch 8, **dadurch gekennzeichnet, dass** die Beschichtungslösung Borsäure, Harnstoff und ein Lösungsmittel, welches vorzugsweise ausgewählt ist aus der Gruppe bestehend aus Wasser, Alkoholen, z.B. Ethanol, Methanol, und Mischungen hiervon, umfasst, wobei Borsäure und Harnstoff bevorzugt in einem Molmengenverhältnis von Borsäure zu Harnstoff im Bereich von 1:2 bis 1:2,5 vorliegen.

10. Verfahren gemäß einem der Ansprüche 7 oder 8, **dadurch gekennzeichnet, dass** die mindestens eine Verstärkungsfaser und/oder das mindestens eine Verstärkungsfaserbündel nach dem Beschichten mit der Beschichtungslösung getrocknet und stabilisiert wird/werden, wobei das Trocknen und Stabilisieren vorzugsweise bei Temperaturen von weniger als 400 °C, besonders bevorzugt bei Temperaturen von 100 °C bis 350°C, ganz besonders bevorzugt bei Temperaturen von 200 °C bis 300 °C, durchgeführt wird.

11. Verfahren gemäß einem der vorhergehenden Ansprüche, **dadurch gekennzeichnet, dass** die in Schritt a) bereitgestellte mindestens eine Verstärkungsfaser und/oder das in Schritt a) bereitgestellte mindestens eine Verstärkungsfaserbündel ein Material enthält oder aus diesem besteht, welches ausgewählt ist aus der Gruppe bestehend aus Kohlenstoff, Siliciumcarbid, Oxidkeramiken und Mischungen hiervon.

12. Verstärkungsfaser oder Verstärkungsfaserbündel, umfassend mindestens eine Bornitridbeschichtung, wobei die Verstärkungsfaser oder das Verstärkungsfaserbündel nach einem Verfahren gemäß einem der vorhergehenden Ansprüche herstellbar oder hergestellt ist.

13. Verstärkungsfaser oder Verstärkungsfaserbündel gemäß Anspruch 12, **dadurch gekennzeichnet, dass** die mindestens eine Bornitrid-Beschichtung hexagonales Bornitrid enthält oder daraus besteht.

14. Verstärkungsfaser oder Verstärkungsfaserbündel gemäß einem der Ansprüche 12 oder 13, **dadurch gekennzeichnet, dass** die mindestens eine Bornitrid-Beschichtung
- eine Zusammensetzung mit einem molaren Verhältnis von Bor zu Stickstoff (B/N) im Bereich von 0,95 bis 1,05, bevorzugt im Bereich von 0,98 bis 1,02, besonders bevorzugt im Bereich von 0,99 bis 1,01, und/oder
- einen Sauerstoffgehalt von weniger als 1 Gew.-%, bevorzugt von weniger als 0,2 Gew.-%, besonders bevorzugt von 0,01 Gew.-% bis 0,1 Gew.-%, und/oder
- einen Kohlenstoffgehalt von weniger als 1 Gew.-%, bevorzugt von weniger als 0,2 Gew.-%, besonders bevorzugt von 0,01 Gew.-% bis 0,1 Gew.-%,
aufweist.

15. Verwendung einer Verstärkungsfaser oder eines Verstärkungsfaserbündels gemäß einem der Ansprüche 12 bis 14 in Kompositen, bevorzugt keramischen Faserverbundwerkstoffen (CMC), in Isolationsanwendungen, in katalytischen Anwendungen, in elektrischen und dielektrischen Anwendungen, in Sensoranwendungen und/oder zur Energiespeicherung und -wandlung.
